# EUROPEAN PATENT APPLICATION

(11) **EP 4 686 287 A1**
(43) Date of publication of application: **28.01.2026**
(21) Application number: 23928057.1
(22) Date of filing: 22.03.2023
(51) Int. Cl.: H04W 72/0446

(54) **RESOURCE DETERMINATION METHOD AND APPARATUS, AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2023/083216
(87) International publication number: WO 2024/192744

(57) **Abstract**

The embodiments of the present disclosure provide a resource determination method and apparatus, and a storage medium. The method comprises: a terminal device determining a first radio resource, and sending a first message to a network device; wherein the first message comprises a first parameter domain, the first parameter domain being used for indicating the resource usage state of the first radio resource, the first radio resource being a subset or the entirety of a second radio resource, and the second radio resource being a radio resource allocated to the terminal device by the network device on the basis of a configured grant (CG) transmission mode. In this way, the terminal device can report to the network device the resource usage state of the first radio resource, allowing the network device to flexibly use and schedule the first wireless resource in accordance with the resource usage state.

## Description

### TECHNICAL FIELD

particular, to a method for resource determination, an apparatus, and a storage medium.

### BACKGROUND

In the wireless communication system, in order to reduce the uplink service latency, a configured grant (CG) transmission manner is introduced in the 3rd Generation Partnership Project (3GPP), and the CG transmission manner may alternatively be referred to as an uplink grant-free transmission manner. In this CG transmission manner, the network device may pre-configure one or more sets of configured grant (CG) configurations for the terminal device, and the terminal device may autonomously perform uplink transmission by using the radio resources related to the CG configurations, without scheduling by the network device, thus saving scheduling resources and reducing uplink service latency.

### SUMMARY

According to embodiments of the present disclosure, there is provided a method for resource determination, an apparatus, and a storage medium.

According to a first aspect of the embodiments of the present disclosure, there is provided a method for resource determination, performed by a terminal device, and the method includes:
determining a first radio resource, where the first radio resource is a subset or a full set of a second radio resource, and the second radio resource is a radio resource allocated to the terminal device by a network device based on a configured grant (CG) transmission manner; and
sending a first message to the network device, where the first message includes a first parameter field, and the first parameter field is used to indicate a resource usage state of the first radio resource.

According to a second aspect of the embodiments of the present disclosure, there is provided a method for resource determination, performed by a network device, and the method includes:
receiving a first message sent by a terminal device, where the first message includes a first parameter field, the first parameter field is used to indicate a resource usage state of a first radio resource, the first radio resource is a subset or a full set of a second radio resource, and the second radio resource is a radio resource allocated to the terminal device by the network device based on a configured grant (CG) transmission manner; and
determining the resource usage state of the first radio resource according to the first parameter field in the first message.

According to a third aspect of the embodiments of the present disclosure, there is provided a terminal device, including:
a processing module, configured to determine a first radio resource, where the first radio resource is a subset or a full set of a second radio resource, and the second radio resource is a radio resource allocated to the terminal device by a network device based on a configured grant (CG) transmission manner; and
a sending module, configured to send a first message to the network device, where the first message includes a first parameter field, and the first parameter field is used to indicate a resource usage state of the first radio resource.

According to a fourth aspect of the embodiments of the present disclosure, there is provided a network device, including:
a receiving module, configured to receive a first message sent by a terminal device, where the first message includes a first parameter field, the first parameter field is used to indicate a resource usage state of a first radio resource, the first radio resource is a subset or a full set of a second radio resource, and the second radio resource is a radio resource allocated to the terminal device by the network device based on a configured grant (CG) transmission manner; and
a processing module, configured to determine the resource usage state of the first radio resource based on a first parameter field in the first message.

According to a fifth aspect of the embodiments of the present disclosure, there is provided an apparatus for resource determination, including:
a processor; and
a memory, configured to store an instruction executable by the processor;
where, the processor is configured to perform steps of the method for resource determination provided in the first aspect of the present disclosure.

According to a sixth aspect of the embodiments of the present disclosure, there is provided an apparatus for resource determination, including:
a processor; and
a memory, configured to store an instruction executable by the processor;
where the processor is configured to perform steps of the method for resource determination provided in the second aspect of the present disclosure.

According to a seventh aspect of the embodiments of the present disclosure, there is provided a computer-readable storage medium having stored a computer program instruction thereon. When the computer program instruction is executed by a processor, steps of the method for resource determination provided in the first aspect of the present disclosure are implemented.

According to an eighth aspect of the embodiments of the present disclosure, there is provided a computer-readable storage medium having stored ta computer program instruction thereon. When the computer program instruction is executed by a processor, steps of the method for resource determination provided in the second aspect of the present disclosure are implemented.

According to a ninth aspect of the embodiments of the present disclosure, there is provided a communication system, including:
a terminal device, configured to perform the method for resource determination provided in the first aspect of the present disclosure; and
a network device, configured to perform the method for resource determination provided in the second aspect of the present disclosure.

The technical solution provided in the embodiments of the present disclosure may include the following beneficial effects. The terminal device determines the first radio resource, and sends the first message to the network device, where the first message includes a first parameter field, the first parameter field is used to indicate a resource usage state of the first radio resource, the first radio resource is a subset or a full set of the second radio resource, and the second radio resource is a radio resource allocated to the terminal device by the network device based on the configured grant (CG) transmission manner. In this way, the terminal device may report the resource usage state of the first radio resource to the network device, so that the network device flexibly uses and schedules the first radio resource based on the resource usage state.

It is to be understood that both the foregoing general description and the following detailed description are exemplary and explanatory only and are not restrictive of the present disclosure.

### BRIEF DESCRIPTION OF THE DRAWINGS

The accompanying drawings here, which are incorporated in and constitute a part of the description, illustrate embodiments consistent with the present disclosure and, together with the description, serve to explain the principles of the present disclosure.
FIG. 1 is a schematic diagram of a communication system shown according to an example embodiment.
FIG. 2 is a schematic diagram of a plurality of sets of CG configurations shown according to an example embodiment.
FIG. 3 is a flowchart of a method for resource determination shown according to an example embodiment.
FIG. 4 is a flowchart of a method for resource determination shown according to an example embodiment.
FIG. 5 is a flowchart of a method for resource determination shown according to an example embodiment.
FIG. 6 is a flowchart of a method for resource determination shown according to an example embodiment.
FIG. 7 is a flowchart of a method for resource determination shown according to an example embodiment.
FIG. 8 is a flowchart of a method for resource determination shown according to an example embodiment.
FIG. 9 is a flowchart of a method for resource determination shown according to an example embodiment.
FIG. 10 is a flowchart of a method for resource determination shown according to an example embodiment.
FIG. 11 is a flowchart of a method for resource determination shown according to an example embodiment.
FIG. 12 is a block diagram of a terminal device shown according to an example embodiment.
FIG. 13 is a block diagram of a network device shown according to an example embodiment.
FIG. 14 is a block diagram of a network device shown according to an example embodiment.
FIG. 15 is a block diagram of an apparatus for resource determination shown according to an example embodiment.

### DETAILED DESCRIPTION

Example embodiments will be described in detail here, examples of which are illustrated in the accompanying drawings. When the following description refers to the accompanying drawings, unless otherwise indicated, the same numerals in different drawings represent the same or similar elements. The implementations described in the following example embodiments do not represent all implementations consistent with the present disclosure. By contrast, they are merely examples of apparatuses and methods consistent with some aspects of the present disclosure as detailed in the appended claims.

In the description of the embodiments of the present disclosure, terms such as "first", "second", or the like are used to distinguish similar objects, and are not necessarily to be construed as a specific order or sequence. In addition, in the case of no contrary explanation, in the description with reference to the accompanying drawings, the same reference signs in different drawings represent the same elements.

In the description of the embodiments of the present disclosure, unless otherwise specified, "a plurality of" means two or more than two, and other quantifiers are similar to it. "At least one item", "one or more items", or similar expressions of them, refer to any combination of these items, including any combination of a single item or plural items. For example, at least one item may represent any number. For another example, one or more of a, b, and c may indicate: a, b, c, a-b, a-c, b-c, or a-b-c, where a, b, and c may be singular or plural. "And/or" is an association relationship describing associated objects, indicating that there may be three relationships. For example, A and/or B may indicate that A exists alone, both A and B exist, and B exists alone, where A and B may be singular or plural. The character "/" represents an "or" relationship between associated objects. The singular forms "a", "an", "an item", "the", "said", "the above" and" the foregoing" are also intended to include the plural forms, unless the context clearly indicates otherwise.

In the description of the embodiments of the present disclosure, the recording manner of "in a case, A is performed; and in another case, B is performed", "in response to a case, A is performed; and in response to another case, B is performed", or the like, may include the following technical solutions according to cases: A is performed independent of B, that is, in some embodiments, A is performed; B is performed independently of A, that is, in some embodiments, B is performed; A and B are selectively performed, that is, in some embodiments one of A and B is selected to perform; both A and B are performed, that is, in some embodiments, A and B are performed. It is also similar to the descriptions above when there are more branches, such as A, B, C, etc.

In the description of the embodiments of the present disclosure, "including A", "comprising A", "indicating A" and "carrying A" may be interpreted as directly carrying A, or may alternatively be interpreted as an indirectly indicating A.

In the description of the embodiments of the present disclosure, terms such as "in response to", "in response to a determining", "in a case of", " at the time", "when", "if", "if", or the like, may be replaced with each other.

In some embodiments, terms such as "greater than", "greater than or equal to", "above", "higher than", "not less than", or the like, may be replaced with each other; and terms such as "less than", "less than or equal to", "below", "lower than", "not greater than", or the like, may be replaced with each other.

In some embodiments, terms such as "network element", "node", "function", "apparatus", "device", "system", "chip", and "chip system", or the like, may be replaced with each other.

In addition, each element, each row, or each column in the table of the embodiments of the present disclosure may be implemented as an independent embodiment; and combinations of any element, any row, and any column may alternatively be implemented as an independent embodiment.

Although operations or steps are described in a particular order in the embodiments or drawings of the present disclosure, it should not be understood as that such operations or steps are required to be performed in the particular order shown or in sequential order, or that all illustrated operations or steps are required to be performed to achieve desirable results. In the embodiments of the present disclosure, in the case of no contradiction, these operations or steps may be performed in any order; these operations or steps may alternatively be performed in parallel; a part of these operations or steps may alternatively be performed; or the operations or steps in the more than one embodiment or drawing may alternatively be any combined, which is not limited in the embodiments of the present disclosure.

It should be noted that the embodiments of the present disclosure are not exhaustive, and are merely illustrative of some embodiments, which are not intended to limit the protection scope of the present disclosure. In the case of no contradiction, each step in a certain embodiment may be implemented as an independent embodiment, and various steps may be arbitrarily combined. For example, the solution after partial steps are removed in a certain embodiment may alternatively be implemented as an independent embodiment, and the order of the various steps in a certain embodiment may be exchanged arbitrarily. In addition, the alternative implementations in a certain embodiment may be arbitrarily combined. Furthermore, various embodiments may be combined. For example, some or all of the steps of different embodiments may be arbitrarily combined, and a certain embodiment may be arbitrarily combined with alternative implementations of other embodiments.

The implementation environment of the embodiments of the present disclosure is firstly described below.

The technical solutions of the embodiments of the present disclosure may be applied to various communication systems. The communication system may include one or more of the 4th generation (4G) communication system, the 5th generation (5G) communication system, and other future wireless communication systems (for example, 6G). The communication system may also include one or more of a public land mobile network (PLMN) network, a device-to-device (D2D) communication system, a machine to machine (M2M) communication system, an Internet of Things (IoT) communication system, a vehicle-to-everything (V2X) communication system, or another communication system.

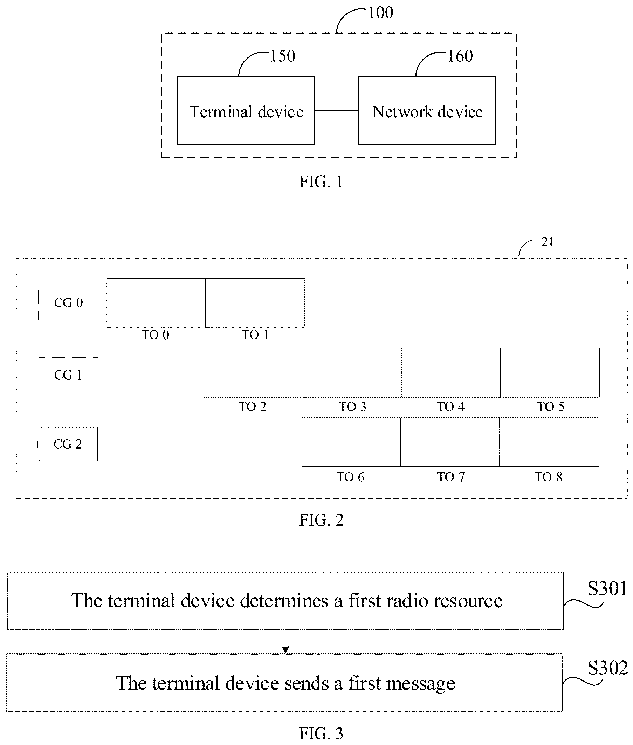

FIG. 1 is a schematic diagram of a communication system 100 shown according to an example embodiment. As shown in FIG. 1, the communication system 100 may include a terminal device 150 and a network device 160. The communication system 100 may be configured to support the 4G network access technology, for example, the long term evolution (LTE) access technology, or the 5G network access technology, such as the new radio access technology (New RAT), or another future wireless communication technology. It should be noted that, in the communication system, both the number of the network device and the number of the terminal device may be one or more. The number of the network device and the number of the terminal device in the communication system shown in FIG. 1 are merely adaptive examples, which is not limited in the present disclosure.

The network device in FIG. 1 may be configured to provide a wireless communication function for the terminal device. For example, the network device may include an evolutional NodeB (eNB or eNodeB) in LTE. The network device may alternatively include a next generation NodeB (gNB or gNodeB) in the 5G network. The network device may alternatively include a next generation-radio access network (NG-RAN) device in the 5G network. The network device may alternatively include at least one of a base station in a future evolved public land mobile network (PLMN), a broadband network gateway (BNG), an aggregation switch, or a non-3GPP access device. Optionally, the network device in the embodiments of the present disclosure may include at least one of the following various forms of base stations, for example, a macro base station, a micro base station (also referred to as a small station), a relay station, an access point, a 5G base station or a future base station, a satellite, a transmitting and receiving point (TRP), a transmitting point (TP), a mobile switching center, and a device-to-device (D2D) device, a machine-to-machine (M2M) device, an Internet of Things (IoT) device, an vehicle-to-everything (V2X) device, or other devices that serve as a base station in a communication system, which is not specifically limited in the embodiments of the present disclosure. For ease of description, in the embodiments of the present disclosure, the apparatus that provides the wireless communication function for the terminal device may be referred to as a network device.

In some embodiments, the network device may include a core network device and an access network device, and the access network device may alternatively be referred to as a base station.

The terminal device in FIG. 1 may be an electronic device that provides voice or data connectivity. For example, the terminal device may alternatively be referred to as user equipment (UE), a subscriber unit, a mobile station, a station, a terminal, or the like. For example, the terminal device may include a smart phone, a smart wearable device, a smart speaker, a smart tablet, a wireless modem, a wireless local loop (WLL) station, a personal digital assistant (PDA), a customer premise equipment (CPE), or the like. With the development of wireless communication technology, a device that may access a communication system, may communicate with a network device of a communication system, and may communicate with another object by using a communication system, or a device that may communicate directly between two or more devices, may be the terminal device in the embodiments of the present disclosure, for example, a terminal and an automobile in intelligent transportation, a household device in smart home, an electricity meter reading instrument in a smart grid, a voltage monitoring instrument, an environment monitoring instrument, a video monitoring instrument in an intelligent security network, a cash register, or the like. In the embodiments of the present disclosure, the terminal device may communicate with the network device. Communication may alternatively be performed between a plurality of terminal devices. The terminal device may be statically and fixed, or may be movable, which is not limited in the embodiments of the present disclosure.

In some embodiments of the present disclosure, both the terminal device and the network device may support a configured grant (CG) transmission manner, and the CG transmission manner may alternatively be referred to as an uplink grant-free transmission manner.

For example, the network device may configure one or more sets of CG configurations for the terminal device based on the CG transmission manner, where each set of CG configurations may include one or more first radio resources, and the terminal device may autonomously perform uplink transmission by using the first radio resource based on the CG transmission manner, without scheduling by the network device, thus saving scheduling resources and reducing uplink service latency. The first radio resource may alternatively be referred to as a configured grant (CG) physical uplink shared channel (PUSCH) transmission resource (TR) (CG PUSCH TR), or may be referred to as a configured grant (CG) physical uplink shared channel (PUSCH) transmission occasion (TO) (CG PUSCH TO), or may be referred to simply as a CG PUSCH occasion, or may be referred to simply as a configured grant (CG) transmission occasion (TO), or may be referred to simply as a transmission occasion (TO).

In some embodiments, each set of CG configurations may correspond to one CG cycle within which the CG configuration may take effect. The number of symbols corresponding to one CG cycle may be determined by the network device and sent to the terminal device; for example, it may be sent by the network device to the terminal device by using higher layer signaling (such as RRC signaling). In an implementation, one CG cycle may correspond to at most 14 * 40960 symbols.

In some embodiments, the network device may allocate a plurality of sets of CG configurations for the terminal device. Different CG configurations may be the same or different in the frequency domain position. Similarly, different CG configurations may alternatively be the same or different in the time domain position. For example, different CG configurations may be the same in the frequency domain position, but different in the time domain position; for another example, different CG configurations may be different in the frequency domain position, but the same in the time domain position; for another example, different CG configurations may be different both in the frequency domain position and in the time domain position.

In some embodiments, the network device may allocate a set of configured grant (CG) configurations for the terminal device.

In some other embodiments, the network device may allocate a plurality of sets of CG configurations for the terminal device, for example, two sets of CG configurations or 16 sets of CG configurations.

It should be noted that different CG configurations may be the same or different in the frequency domain position, and similarly, different CG configurations may alternatively be the same or different in the time domain position.

For example, frequency domain positions of different CG configurations may be completely the same, completely different, or partially the same. For example, the frequency domain positions of partial CG configurations may overlap with each other.

For another example, time domain positions of different CG configurations may alternatively be completely the same, completely different, or partially the same. For example, the time domain positions of partial CG configurations may overlap with each other.

For another example, different CG configurations may be the same in the frequency domain position, but different in the time domain position.

For another example, different CG configurations may be different in the frequency domain position, but the same in the time domain position.

For another example, different CG configurations may be different both in the frequency domain position and in the time domain position.

In some embodiments, each set of CG configurations may include a plurality of first radio resources, and the first radio resource may be a radio resource allocated to the terminal device by the network device based on one or more sets of configured grant (CG) configurations. The first radio resource may alternatively be referred to as a CG PUSCH TR, or may be referred to as a CG PUSCH TO, or may be referred to simply as a CG PUSCH occasion, or may be referred to simply as a CG TO, or may be referred to simply as a TO. The numbers of first radio resources included in different CG configurations may be the same, or may be different.

FIG. 2 is a schematic diagram of a plurality sets of CG configurations shown according to an example embodiment. As shown in FIG. 2, the network device may allocate a plurality of sets of CG configurations 21 (for example, three sets) for the terminal device. The plurality of sets of CG configurations 21 may include CG 0, CG 1, and CG 2. Each CG configuration may include a plurality of first radio resources. For example, the first radio resources included in CG 0 may be TO 0 and TO 1; the first radio resources included in CG 1 may be TO 2, TO 3, TO 4, and TO 5; and the first radio resources included in CG 2 may be TO 6, TO 7, and TO 8. It should be noted that, although it takes that the number of first radio resources included in each CG configuration is different as an example in FIG. 3, it may be understood that the number of first radio resources included in each CG configuration may alternatively be the same, which is not limited in the embodiments of the present disclosure.

In an embodiment of the present disclosure, there may be a plurality of manners in which the network device allocates the configured grant (CG) configuration for the terminal device, for example:

In some embodiments, the network device may send all information of the CG configuration to the terminal device by using a second message (for example, RRC signaling or another message). After receiving the second message sent by the network device, the terminal device may autonomously perform uplink transmission by using the CG configuration. The second message may carry all information of one or more sets of CG configurations.

In some other embodiments, the network device may send all information of the CG configuration to the terminal device by using a second message (for example, RRC signaling or another message), and activate the CG configuration by using a third message (for example, an activation DCI indication, a MAC CE, or another message). After receiving the second message and the third message, the terminal device may autonomously perform uplink transmission by using the CG resource.

In some other embodiments, the network device may send a part of information of the CG configuration to the terminal device by using a second message (for example, RRC signaling or another message), send another part of information of the CG configuration to the terminal device by using a third message (for example, an activation DCI indication, a MAC CE, or another message), and activate the CG configuration, so as to complement all information of the CG configuration. After receiving the second message and the third message, the terminal device may autonomously perform uplink transmission by using the CG resource.

In the related art, the radio resource management and scheduling based on the CG transmission manner are relatively simple, which cannot adapt to requirements of new services. For example, the communication system may further support an XR (such as, augmented reality (AR) and/or virtual reality (VR)) service. The XR service is different from three existing typical services of ultra-reliable low-latency communication (URLLC), enhanced mobile broadband (eMBB), and enhanced machine-type communication (eMTC). The XR service has characteristics of periodicity, a large throughput requirement, and a short latency requirement.

In addition, there is a certain flexibility in the XR service, and there may be a case in which the first radio resource allocated by the network device based on the CG transmission manner does not match with the radio resource required for transmission of the XR service. For example, partial first radio resources may be idle, or partial time domain symbols of the first radio resource may be idle, resulting in a low utilization rate of radio resources allocated based on the CG transmission manner.

FIG. 3 is a flowchart of a method for resource determination shown according to an example embodiment. As shown in FIG. 3, the method may be performed by a terminal device in the communication system. The method may include following steps.

In S301, the terminal device determines a first radio resource.

In some embodiments, the first radio resource is a subset or a full set of a second radio resource, and the second radio resource is a radio resource allocated to the terminal device by the network device based on the configured grant (CG) transmission manner.

The first radio resource may alternatively be referred to as a CG PUSCH TR, or may be referred to as a CG PUSCH TO, or may be referred to simply as a CG PUSCH occasion, or may be referred to simply as a CG TO, or may be referred to simply as a TO. Similarly, the second radio resource may alternatively be referred to as a CG PUSCH TR, a CG PUSCH TO, a CG PUSCH Occasion, a CG TO, or a TO.

It should be noted that the first radio resource may be a time domain resource, a frequency domain resource, or a time frequency domain resource.

In some embodiments, the second radio resource may be all CG transmission occasions corresponding to a second CG configuration, and the second CG configuration may be at least one CG configuration allocated to the terminal device by the network device based on the configured grant (CG) transmission manner.

It should be noted that the second CG configuration may be a set of CG configurations, or may be a plurality of sets of CG configurations. For example, the network device allocates N sets of CG configurations for the terminal device; and the second CG configuration may be the N sets of CG configurations, or may be partial CG configurations in the N sets of CG configurations.

It should be further noted that the plurality of sets of CG configurations allocated by the network device for the terminal device may be a plurality of sets of CG configurations the same in the frequency domain configuration and different in the time domain configuration, or may be a plurality of sets of CG configurations different in the frequency domain configuration and the same in the time domain configuration, or may be a plurality of sets of CG configurations different in the frequency domain configuration and the same in the time domain configuration.

In an implementation, the first radio resource may be all second radio resources.

For example, all second radio resources (TO) in one or more set of CG configurations allocated by the network device for the terminal device may be used as the first radio resource.

In an implementation, the first radio resource may be a radio resource in the second radio resource that is able to be reused by the network device.

Among them, there may be a plurality of manners in which the network device reuses the first radio resource.

For example, the network device may allocate, based on the dynamic scheduling manner, the first radio resource whose resource usage state is the idle state to the terminal device that sends the first message for reusing.

For another example, the network device may allocate the first radio resource whose resource usage state is the idle state to another terminal device for use, and the allocation manner may be a dynamic scheduling-based allocation or a configured grant (CG)-based allocation. The another terminal device is any terminal device in the network other than the terminal device that sends the first message.

In another implementation, the first radio resource may be a radio resource in the second radio resource whose resource usage state is able to be reported by the terminal device.

For example, a first parameter field of the first message may include only the resource usage state of the first radio resource, but does not include the resource usage state of another second radio resource other than the first radio resource. In this way, the uplink resource used to transmit the first message may be saved.

In S302, the terminal device sends the first message.

For example, the terminal device may send the first message to the network device.

In some embodiments of the present disclosure, the first message may include a first parameter field, and the first parameter field may be used to indicate the resource usage state of the first radio resource.

For example, the first parameter field may include at least one first indication bit, and one first indication bit is used to indicate the resource usage state of one first radio resource.

In some embodiments, the resource usage state may be an idle state or an occupied state.

In other embodiments, the resource usage state may be an idle state or a non-idle state.

In some other embodiments, the resource usage state may be an occupied state or a non-occupied state.

It should be noted that the network device may allocate a plurality sets of CG configurations for the terminal device. The first radio resource may be all CG transmission occasions included in the plurality sets of CG configurations, or may be a part of all CG transmission occasions included in the plurality sets of CG configurations.

The first radio resource may alternatively be referred to as a candidate TO. The candidate TO may be a TO indicated by the first parameter field, or the candidate TO may be a TO with a specified state indicated by the first parameter field. The specified state may be any one of the idle state, the occupied state, the non-idle state, or a non- occupied state.

In some other embodiments of the present disclosure, the first message may include the first parameter field and a second parameter field, the second parameter field may be used to indicate a first CG configuration, and the first radio resource indicated by the first parameter field may be a radio resource included in the first CG configuration.

In some other embodiments of the present disclosure, the first message may include the first parameter field, and the terminal device may receive a second parameter field sent by the network device. The second parameter field may be used to indicate a first CG configuration, and the first radio resource indicated by the first parameter field may be a radio resource included in the first CG configuration.

It should be noted that there may be one or more sets of first CG configurations. For example, the first CG configuration may be all CG configurations allocated by the network device for the terminal device. For another example, the first CG configuration may be at least one set of CG configurations in all CG configurations allocated by the network device to the terminal device.

In some embodiments, the second parameter field may include at least one second indication bit, and the second indication bit is used to indicate the first CG configuration.

For example, the network device allocates four CG configurations of CG 0, CG 1, CG 2, and CG 3 for the terminal device; the second parameter field may include four second indication bits; and the first bit to the last bit correspond to CG 0, CG 1, CG 2, and CG 3 in sequence.

In some other embodiments, the second parameter field may include a configuration index corresponding to the first CG configuration. There may be one or more configuration indexes.

For example, the network device allocates four CG configurations of CG 0, CG 1, CG 2, and CG 3 for the terminal device; the configuration index may be 2 bits; and values 00, 01, 10, and 11 of the configuration index may correspond to CG 0, CG 1, CG 2, and CG 3 in sequence.

In some embodiments, in a case that the first message does not include the second parameter field, the first CG configuration may be all CG configurations allocated by the network device for the terminal device.

In some other embodiments, in a case that the first message does not include the second parameter field, the first CG configuration may be the CG configuration for sending the first message.

In some embodiments, in a case that the network device does not configure the second parameter field, the first CG configuration may be all CG configurations allocated by the network device for the terminal device.

In some other embodiments, in a case that the network device does not configure the second parameter field, the first CG configuration may be the CG configuration for sending the first message.

In this way, the terminal device may indicate, by using the first parameter field and the second parameter field, the usage state of the first radio resource in the partial or all CG configurations.

In some embodiments of the present disclosure, the terminal device may send the first message to the network device by using a third radio resource. Similarly, the network device may also receive the first message by using the third radio resource.

In an implementation, the third radio resource may be a radio resource determined according to a protocol agreement.

In another implementation, the third radio resource may be a radio resource determined by the network device, and the network device may further send the information about the third radio resource to the terminal device.

In another implementation, the third radio resource may be a radio resource determined by the terminal device, and the terminal device may further send the information about the third radio resource to the network device.

It should be noted that the third radio resource may carry only the first message; and the third radio resource may alternatively carry both the first message and other data or signaling.

In an implementation, the third radio resource may be a third CG configuration, and the third CG configuration may alternatively be referred to as a third CG PUSCH. For example, the terminal device may send the first message by using a CG-UCI (Uplink Control Information).

In another implementation, the third radio resource may be one or more CG transmission occasions.

For example, the terminal device may send the first message by using a CG transmission occasion.

For another example, the terminal device may perform uplink transmission on the CG transmission occasion in the non-idle state, send the first message on the CG transmission occasion, and indicate the resource usage state of the first radio resource by using the first message.

In another implementation, the third radio resource may be a dynamically grant physical uplink shared channel (DG PUSCH).

In this way, the first message may be sent by using the DG PUSCH.

In another implementation, the third radio resource may be a physical uplink control channel (PUCCH).

In this way, the first message may be sent by using the PUCCH.

By using the foregoing method, the terminal device determines the first radio resource, and sends the first message to the network device, where the first message includes a first parameter field, the first parameter field is used to indicate a resource usage state of the first radio resource, the first radio resource is a subset or a full set of the second radio resource, and the second radio resource is a radio resource allocated to the terminal device by the network device based on the configured grant (CG) transmission manner. In this way, the terminal device may report the resource usage state of the first radio resource to the network device, so that the network device flexibly uses and schedules the first radio resource according to the resource usage state, to improve the utilization rate of the radio resources allocated based on the CG transmission manner.

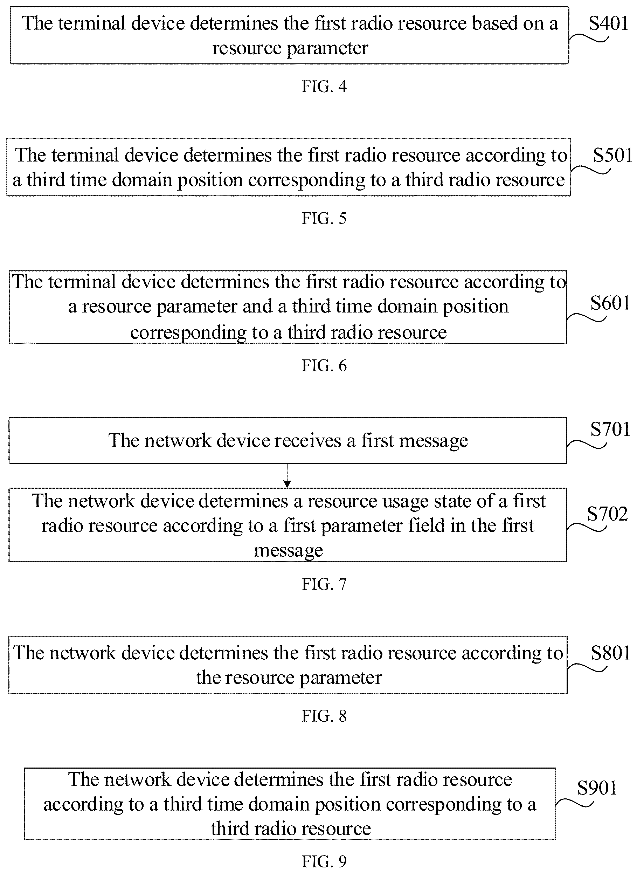

FIG. 4 is a flowchart of a method for resource determination shown according to an example embodiment. As shown in FIG. 4, the method may be performed by the terminal device in the communication system. The method may include the following step.

In S401, the terminal device determines the first radio resource based on a resource parameter.

In some embodiments, the resource parameter may be a parameter determined by the network device and sent to the terminal device.

For example, the terminal device may receive a fourth message sent by the network device, where the fourth message may include the resource parameter.

Among them, the fourth message may include at least one of a radio resource control (RRC) message, a medium access control control element (MAC CE), downlink control information (DCI), or another message sent by the network device to the terminal device.

In some other embodiments, the resource parameter may be a parameter determined by the terminal device and sent to the network device.

For example, the terminal device may determine the resource parameter, and send a fifth message to the network device, where the fifth message may include the resource parameter.

Among them, the fifth message may include at least one of an RRC message, a MAC CE, uplink control information (UCI), or another message sent by the terminal device to the network device.

In some other embodiments, the resource parameter may be a parameter agreed according to a protocol.

In this way, the terminal device may obtain the resource parameter in any one or more of the foregoing manners.

In some embodiments, the resource parameter may be used to indicate a priority corresponding to the first radio resource. The priority corresponding to the first radio resource may be a specified priority. The specified priority may be a high priority, a low priority, or any other priority.

For example, in the second radio resource allocated by the network device to the terminal device, the second radio resource whose priority is the specified priority may be used as the first radio resource. The second radio resource may belong to CG transmission occasions under one or more CG configurations.

Optionally, the resource parameter may be a first priority parameter corresponding to the first radio resource, and the first priority parameter is used to indicate the priority corresponding to the first radio resource.

In an implementation, the priority corresponding to the first radio resource may be a high priority, that is, the radio resource whose priority is a high priority in the second radio resource may be used as the first radio resource.

In another implementation, the priority corresponding to the first radio resource may be a low priority, that is, the radio resource whose priority is a low priority in the second radio resource may be used as the first radio resource.

In this way, the first radio resource may be determined by using a priority.

In some other embodiments, the resource parameter may be used to indicate a priority corresponding to the CG configuration; the first radio resource may be a radio resource included in the first CG configuration; a priority corresponding to the first CG configuration may be a specified priority; and the specified priority may be a high priority, a low priority, or any other priority.

For example, in one or more sets of CG configurations allocated by the network device for the terminal device, the CG configuration whose priority is the specified priority may be used as the first CG configuration, and all CG transmission occasions included in the first CG configuration may be used as the first radio resource.

Optionally, the resource parameter may be a second priority parameter corresponding to the CG configuration, and the second priority parameter is used to indicate a priority corresponding to the CG configuration.

In some other embodiments, the resource parameter may be a first candidate identifier corresponding to the first radio resource. The first candidate identifier may be used to indicate that the first radio resource is able to be reused by the network device, or the first candidate identifier may be used to indicate that the resource usage state of the first radio resource is able to be reported by the terminal device.

For example, in the second radio resource allocated by the network device for the terminal device, the second radio resource marked by the first candidate identifier may be used as the first radio resource. The second radio resource may belong to CG transmission occasions under one or more CG configurations.

In an implementation, the first candidate identifier may be an invalid value. Radio resources included in all CG configurations allocated by the network device for the terminal device are able to be reused by the network device, or resource usage states of the radio resources included in all CG configurations allocated by the network device for the terminal device are able to be reported by the terminal device.

In another implementation, the first candidate identifier may be an invalid value. None of radio resources included in all CG configurations allocated by the network device for the terminal device are able to be reused by the network device, or none of resource usage states of the radio resources included in all CG configurations allocated by the network device for the terminal device are able to be reported by the terminal device.

Optionally, the resource parameter may be a first candidate identifier corresponding to the first radio resource. The first candidate identifier is used to indicate a first candidate identifier corresponding to the first radio resource, and the first candidate identifier is used to indicate whether the first radio resource is able to be reused by the network device.

In some other embodiments, the resource parameter may be used to indicate a second candidate identifier corresponding to the CG configuration, and the first radio resource may be a radio resource included in the first CG configuration. The second candidate identifier may be used to indicate that the radio resource included in the first CG configuration is able to be reused by the network device, or the second candidate identifier may be used to indicate that the resource usage state of the radio resource included in the first CG configuration is able to be reported by the terminal device.

For example, in one or more sets of CG configurations allocated by the network device for the terminal device, the CG configuration marked by the second candidate identifier may be used as the first CG configuration, and all CG transmission occasions included in the first CG configuration may be used as the first radio resource.

In an implementation, the second candidate identifier may be an invalid value. Radio resources included in all CG configurations allocated by the network device for the terminal device are able to be reused by the network device, or resource usage states of the radio resources included in all CG configurations allocated by the network device for the terminal device are able to be reported by the terminal device.

In another implementation, the second candidate identifier may be an invalid value. None of radio resources included in all CG configurations allocated by the network device for the terminal device are able to be reused by the network device, or none of resource usage states of the radio resources included in all CG configurations allocated by the network device for the terminal device are able to be reported by the terminal device.

Optionally, the resource parameter may be a second candidate identifier corresponding to the CG configuration, and the second candidate identifier is used to indicate whether the second radio resource is able to be reused by the network device.

It should be noted that the first radio resource determined according to the method for resource determination shown in FIG. 4 may alternatively be referred to as a semi-static first radio resource or a semi-static candidate TO.

In this way, by using any one of the foregoing manners, the terminal device may determine the first radio resource based on the resource parameter.

FIG. 5 is a flowchart of a method for resource determination shown according to an example embodiment. As shown in FIG. 5, the method may be performed by the terminal device in the communication system. The method may include the following step.

In S501, the terminal device determines the first radio resource according to a third time domain position corresponding to a third radio resource.

Among them, the third radio resource may be a radio resource used to transmit the first message.

In some embodiments, the first time domain position corresponding to the first radio resource may be later than the third time domain position corresponding to the third radio resource.

For example, at least one set of CG configurations allocated by the network device for the terminal device includes a plurality of second radio resources, and each second radio resource corresponds to one second time domain position. The second radio resource whose second time domain position is later than the third time domain position may be used as the first radio resource.

In an implementation, the first time domain position may be a position of a start symbol or an end symbol of the first radio resource, and the second time domain position may be a position of a start symbol or an end symbol of the second radio resource.

In an implementation, the third time domain position may be a position of a start symbol or an end symbol of the third radio resource.

For example, the first time domain position may be a position of a start symbol of the first radio resource, the second time domain position may be a position of a start symbol of the second radio resource, and the third time domain position may be a position of an end symbol of the third radio resource.

For another example, the first time domain position may be a position of a start symbol of the first radio resource, the second time domain position may be a position of a start symbol of the second radio resource, and the third time domain position may be a position of a start symbol of the third radio resource.

For another example, the first time domain position may be a position of an end symbol of the first radio resource, the second time domain position may be a position of an end symbol of the second radio resource, and the third time domain position may be a position of an end symbol of the third radio resource.

The third radio resource may be any one of a CG configuration, a CG PUSCH, a CG transmission occasion, a dynamically grant physical uplink shared channel (DG PUSCH), or a physical uplink control channel (PUCCH).

For example, the third radio resource may be a CG PUSCH, and the third time domain position may be a position of a start symbol or an end symbol of the CG PUSCH.

For another example, the third radio resource may be a CG PUSCH, the third time domain position may be a start symbol or an end symbol of a first carrying resource, and the first carrying resource may be a radio resource in the CG PUSCH that carries the first message.

For example, the CG PUSCH may include 14 symbols, where the first 7 symbols are used to carry the first message. The first 7 symbols may be the first carrying resource, the start symbol of the first carrying resource may be used as the third time domain position, or the end symbol of the first carrying resource may be used as the third time domain position.

For another example, the third radio resource may be a dynamically grant physical uplink shared channel (DG PUSCH), and the third time domain position may be a position of a start symbol or an end symbol of the DG PUSCH.

For another example, the third radio resource may be a DG PUSCH, the third time domain position may be a start symbol or an end symbol of a second carrying resource, and the second carrying resource may be a radio resource in the DG PUSCH that carries the first message.

For example, the DG PUSCH may include 14 symbols, where the first five symbols are used to carry the first message. The first five symbols may be the second carrying resource, the start symbol of the second carrying resource may be used as the third time domain position, or the end symbol of the second carrying resource may be used as the third time domain position.

For another example, the third radio resource may be a physical uplink control channel (PUCCH), and the third time domain position may be a position of a start symbol or an end symbol of the PUCCH.

In some other embodiments, the first time domain position corresponding to the first radio resource may be later than the third time domain position corresponding to the third radio resource, and the time difference between the first time domain position and the third time domain position may be greater than or equal to a first time interval.

For example, at least one set of CG configurations allocated by the network device for the terminal device includes a plurality of second radio resources, and each second radio resource corresponds to one second time domain position. The second radio resource that the second time domain position is later than the third time domain position and the time difference between the second time domain position and the third time domain position is greater than or equal to the first time interval, may be used as the first radio resource.

The first time interval may be an absolute time, or may be N time domain units, and the time domain unit may be a symbol, a slot, a subframe, or a frame.

In an implementation, the first time interval may be a time agreed by a protocol. The terminal device and the network device may determine the first time interval according to a manner agreed by a protocol, respectively.

In another implementation, the first time interval may be a time determined by the network device, and the network device may further send the first time interval to the terminal device.

For example, the network device may send the first time interval to the terminal device by using first offset signaling.

In another implementation, the first time interval may be a time determined by the terminal device, and the terminal device may further send the first time interval to the network device.

In still another implementation, the first time interval may be determined according to a first terminal capability of the terminal device. For example, the first terminal capability may be defined by using a protocol. The first terminal capability may indicate a minimum time interval between the terminal device sending the first message and the CG transmission occasion being indicated to the terminal device, that is, the first time interval. Further, the terminal device may send the first terminal capability to the network device by using capability reporting information, or the terminal device may send the first time interval to the network device by using the capability reporting information.

In some other embodiments, the first time domain position corresponding to the first radio resource may be later than the third time domain position corresponding to the third radio resource, and the time difference between the first time domain position and the third time domain position may not be less than the first time interval.

For specific definitions of the first time domain position, the second time domain position, and the third time domain position, reference may be made to the descriptions of the foregoing embodiments of the present disclosure, and details are not described here again.

It should be noted that the first radio resource determined according to the method for resource determination shown in FIG. 5 may alternatively be referred to as a dynamic first radio resource or a dynamic candidate TO.

In this way, by using any one of the foregoing manners, the terminal device may determine the first radio resource according to the third time domain position corresponding to the third radio resource.

FIG. 6 is a flowchart of a method for resource determination shown according to an example embodiment. As shown in FIG. 6, the method may be performed by the terminal device in the communication system. The method may include the following step.

In S601, the terminal device determines the first radio resource according to a resource parameter and the third time domain position corresponding to the third radio resource.

Among them, the third radio resource may be a radio resource used to transmit the first message.

In some embodiments, a fifth radio resource may be determined according to the resource parameter, and the first radio resource may be determined from the fifth radio resource according to the third time domain position corresponding to the third radio resource.

In an implementation, the first time domain position corresponding to the first radio resource may be later than the third time domain position.

For example, the fifth radio resource is determined according to the resource parameter, and each fifth radio resource corresponds to one fifth time domain position. The fifth radio resource whose fifth time domain position is later than the third time domain position may be used as the first radio resource.

In another implementation, the first time domain position corresponding to the first radio resource may be later than the third time domain position corresponding to the third radio resource, and the time difference between the first time domain position and the third time domain position may be greater than or equal to the first time interval.

For example, the fifth radio resource is determined according to the resource parameter, and each fifth radio resource corresponds to one fifth time domain position. The fifth radio resource that the fifth time domain position is later than the third time domain position and the time difference between the fifth time domain position and the third time domain position is greater than or equal to the first time interval, may be used as the first radio resource.

It should be noted that the resource parameter may refer to the specific description in the embodiment shown in FIG. 4. The third radio resource, the third time domain position, and the first time interval may refer to the specific description in the embodiment shown in FIG. 5, and details are not described here again.

It should also be noted that the first radio resource determined according to the method for resource determination shown in FIG. 6 may alternatively be referred to as a first radio resource of dynamic and semi-static binding or a candidate TO of dynamic and semi-static binding.

In this way, the terminal device may determine the first radio resource according to the resource parameter and the third time domain position corresponding to the third radio resource.

In some embodiments of the present disclosure, the terminal device may send the first message to the network device by using a fourth radio resource.

It should be noted that the fourth radio resource may carry only the first message. The fourth radio resource may alternatively carry both the first message and other data or signaling.

In some embodiments, the fourth radio resource may be a CG configuration determined according to a protocol agreement.

In this embodiment, the manner of determining the fourth radio resource may alternatively be referred to as an implicit manner.

For example, the terminal device may determine the CG parameter of the at least one CG configuration allocated by the network device to the terminal device, and determine the fourth radio resource according to the CG parameter.

In some implementations, the CG parameter may include at least one of the following:
a configuration index of the CG configuration;
frequency domain position information of the CG configuration;
time domain position information of the CG configuration;
a number of CG transmission occasions included in the CG configuration; or
a priority of the CG configuration.

In an implementation, the CG parameter includes an item, and the CG configuration corresponding to the maximum value or the minimum value in the CG parameter may be used as the fourth radio resource.

For example, the CG parameter may include a configuration index, and the CG configuration corresponding to the maximum value or the minimum value in the configuration index is used as the fourth radio resource.

For another example, the CG parameter may include frequency domain position information, and the frequency domain position information may be a frequency domain position start frequency or a frequency domain position termination frequency. The CG configuration corresponding to the maximum value or the minimum value in the frequency domain position information may be used as the fourth radio resource.

For another example, the CG parameter may include time domain position information, and the time domain position information may be a time domain position start moment or a time domain position termination moment. The CG configuration corresponding to the maximum value or the minimum value in the time domain position information may be used as the fourth radio resource.

For another example, the CG parameter may include a number of CG transmission occasions included in the CG configuration, and the CG configuration with a maximum number or a minimum number of CG transmission occasions may be used as the fourth radio resource.

For another example, the CG parameter may include a priority, and the CG configuration with the highest priority or the lowest priority may be used as the fourth radio resource.

In another implementation, the CG parameter may include a plurality of items. For example, the CG parameter may include a first CG parameter, a second CG parameter, a third CG parameter, a fourth CG parameter, and a fifth CG parameter. Firstly, the CG configuration corresponding to the maximum value or the minimum value in the first CG parameter may be used as the first candidate radio resource. If there is one first candidate radio resource, the first candidate radio resource is used as the fourth radio resource. If there is more than one first candidate radio resource, the first candidate resource corresponding to the maximum value or the minimum value in the second CG parameter is used as the second candidate radio resource. If there is one second candidate radio resource, the second candidate radio resource is used as the fourth radio resource. If there is more than one second candidate radio resource, the third candidate radio resource is continued to be determined according to the third CG parameter, and so on.

In some other embodiments, the fourth radio resource may be a radio resource determined by the network device, and the network device may further send the information about the fourth radio resource to the terminal device.

For example, the network device may configure the resource identifier of the fourth radio resource, and send the information about the fourth radio resource to the terminal device by using at least one of an RRC message, a MAC CE, a DCI, or another message sent by the network device to the terminal device.

In some other embodiments, the fourth radio resource may be a radio resource determined by the terminal device, and the terminal device may further send the information about the fourth radio resource to the network device.

For example, the terminal device may send the information about the fourth radio resource to the network device by using at least one of an RRC message, a MAC CE, a UCI, or another message sent by the terminal device to the network device.

In this way, the terminal device may determine the fourth radio resource, and send the first message to the network device by using the fourth radio resource.

FIG. 7 is a flowchart of a method for resource determination shown according to an example embodiment. As shown in FIG. 6, the method may be performed by the network device in the communication system. The method may include following steps.

In S701, the network device receives a first message.

For example, the network device may receive the first message sent by the terminal device.

In some embodiments of the present disclosure, the first message may include a first parameter field, and the first parameter field may be used to indicate a resource usage state of a first radio resource.

It should be noted that the first radio resource may be a time domain resource, a frequency domain resource, or a time frequency domain resource.

In some other embodiments of the present disclosure, the first message may include the first parameter field and a second parameter field, the second parameter field may be used to indicate a first CG configuration, and the first radio resource indicated by the first parameter field may be a radio resource included in the first CG configuration.

In some other embodiments of the present disclosure, the first message may include the first parameter field, and the network device may configure the second parameter field and send the second parameter field to the terminal device. The second parameter field may be used to indicate the first CG configuration, and the first radio resource indicated by the first parameter field may be a radio resource included in the first CG configuration.

In an implementation, in a case that the network device does not configure the second parameter field, the first CG configuration may be all CG configurations allocated by the network device for the terminal device. For example, the network device may not configure the second parameter field, and the first CG configuration may be all CG configurations allocated by the network device for the terminal device.

In another implementation, in a case that the network device does not configure the second parameter field, the first CG configuration may be the CG configuration for transmitting the first message. For example, the network device may not configure the second parameter field, and the first CG configuration may be the CG configuration for transmitting the first message.

It should be noted that there may be one or more sets of first CG configurations. For example, the first CG configuration may be all CG configurations allocated by the network device for the terminal device. For another example, the first CG configuration may be at least one set of CG configurations in all CG configurations allocated by the network device to the terminal device.

It should be further noted that the plurality of sets of CG configurations allocated by the network device for the terminal device may be a plurality of sets of CG configurations the same in the frequency domain configuration and different in the time domain configuration, or may be a plurality of sets of CG configurations different in the frequency domain configuration and the same in the time domain configuration, or may be a plurality of sets of CG configurations different in the frequency domain configuration and the same in the time domain configuration.

In some embodiments, the first radio resource is a subset or a full set of the second radio resource, and the second radio resource is a radio resource allocated to the terminal device by the network device based on the configured grant (CG) transmission manner.

In some embodiments, the second radio resource may be all CG transmission occasions corresponding to a second CG configuration, and the second CG configuration may be at least one CG configuration allocated to the terminal device by the network device based on the configured grant (CG) transmission manner.

It should be noted that the second CG configuration may be a set of CG configurations, or may be a plurality of sets of CG configurations. For example, the network device allocates N sets of CG configurations for the terminal device; and the second CG configuration may be the N sets of CG configurations, or may be partial CG configurations in the N sets of CG configurations.

In an implementation, the first radio resource may be all second radio resources.

For example, all second radio resources (TO) in one or more sets of CG configurations allocated by the network device for the terminal device may be used as the first radio resource.

In an implementation, the first radio resource may be a radio resource in the second radio resource that is able to be reused by the network device.

Among them, there may be a plurality of manners in which the network device reuses the first radio resource.

For example, the network device may allocate, based on the dynamic scheduling manner, the first radio resource whose resource usage state is the idle state to the terminal device that sends the first message for reusing.

For another example, the network device may allocate the first radio resource whose resource usage state is the idle state to another terminal device for use, and the allocation manner may be a dynamic scheduling-based allocation or a configured grant (CG)-based allocation. The another terminal device is any terminal device in the network other than the terminal device that sends the first message.

In another implementation, the first radio resource may be a radio resource in the second radio resource whose resource usage state is able to be reported by the terminal device.

It should be noted that, for detailed descriptions of the first parameter field, the second parameter field, the resource usage state, the first CG configuration, the first radio resource, and the second radio resource, reference may be made to the description in the embodiment shown in FIG. 3, and details are not described here again.

In some embodiments of the present disclosure, the network device may receive the first message by using a fourth radio resource.

The fourth radio resource may carry only the first message. The fourth radio resource may alternatively carry both the first message and other data or signaling.

In some embodiments, the fourth radio resource may be a CG configuration determined according to a protocol agreement.

In this embodiment, the manner of determining the fourth radio resource may alternatively be referred to as an implicit manner.

For example, the network device may determine the CG parameter of the at least one CG configuration allocated to the terminal device, and determine the fourth radio resource according to the CG parameter.

In some implementations, the CG parameter may include at least one of the following:
a configuration index of the CG configuration;
frequency domain position information of the CG configuration;
time domain position information of the CG configuration;
a number of CG transmission occasions included in the CG configuration; or
a priority of the CG configuration.

It should be noted that, with reference to the detailed description of the CG parameters, reference may be made to the descriptions in the foregoing embodiments of the present disclosure, and details are not described here again.

In some other embodiments, the fourth radio resource may be a radio resource determined by the network device, and the network device may further send the information about the fourth radio resource to the terminal device.

In some other embodiments, the fourth radio resource may be a radio resource determined by the terminal device, and the terminal device may further send the information about the fourth radio resource to the network device.

In this way, the network device may determine the fourth radio resource, and receive the first message by using the fourth radio resource.

In S702, the network device determines a resource usage state of a first radio resource according to a first parameter field in the first message.

For example, the first parameter field may include at least one first indication bit, and one first indication bit is used to indicate the resource usage state of one first radio resource. The network device may determine the resource usage state of the first radio resource according to the value of the first indication bit.

In some embodiments, the resource usage state may be an idle state or an occupied state.

In other embodiments, the resource usage state may be an idle state or a non-idle state.

In some other embodiments, the resource usage state may be an occupied state or a non-occupied state.

In some embodiments of the present disclosure, the network device may reuse the first radio resource whose resource usage state is an idle state.

In an implementation, the network device may allocate, based on the dynamic scheduling manner, the first radio resource whose resource usage state is the idle state to the terminal device that sends the first message for use.

In another implementation, the network device may allocate the first radio resource whose resource usage state is the idle state to another terminal device for use, and the allocation manner may be a dynamic scheduling-based allocation or a configured grant (CG)-based allocation. The another terminal device is any terminal device in the network other than the terminal device that sends the first message.

In some embodiments of the present disclosure, before step S701, the network device may further allocate a configured grant (CG) configuration for the terminal device, and the specific manner of allocating the CG configuration may refer to the description of the foregoing embodiments of the present disclosure, and details are not described here again.

It should be noted that, in the case of no contradiction, this embodiment may be combined with the foregoing embodiments or implementations of the present disclosure and various optional solutions of them. The specific implementations of the foregoing steps in this embodiment may also refer to the descriptions in the foregoing embodiments of the present disclosure, and details are not described here again.

By using the foregoing method, the network device receives the first message, and determines the resource usage state of the first radio resource according to the first parameter field in the first message, where the first message includes a first parameter field, the first parameter field is used to indicate the resource usage state of the first radio resource, the first radio resource is a subset or a full set of the second radio resource, and the second radio resource is a radio resource allocated to the terminal device by the network device based on the configured grant (CG) transmission manner. In this way, the network device may determine the resource usage state of the first radio resource, and flexibly use and schedule the first radio resource according to the resource usage state.

FIG. 8 is a flowchart of a method for resource determination shown according to an example embodiment. As shown in FIG. 8, the method may be performed by the network device in the communication system. The method may include the following step.

In S801, the network device determines the first radio resource according to the resource parameter.

In some embodiments, the network device may further send the resource parameter to the terminal device, and the resource parameter may be used to indicate the terminal device to determine the first radio resource.

In some other embodiments, the network device may receive the resource parameter sent by the terminal device, and the resource parameter may be used to determine the first radio resource.

In some embodiments, the resource parameter may be used to indicate a priority corresponding to the first radio resource. The priority corresponding to the first radio resource may be a specified priority, and the specified priority may be a high priority, a low priority, or any other priority.

In some other embodiments, the resource parameter may be used to indicate a priority corresponding to the CG configuration; the first radio resource may be a radio resource included in the first CG configuration; a priority corresponding to the first CG configuration may be a specified priority; and the specified priority may be a high priority, a low priority, or any other priority.

In some other embodiments, the resource parameter may be a first candidate identifier corresponding to the first radio resource. The first candidate identifier may be used to indicate that the first radio resource is able to be reused by the network device, or the first candidate identifier may be used to indicate that the resource usage state of the first radio resource is able to be reported by the terminal device.

In an implementation, the first candidate identifier may be an invalid value. Radio resources included in all CG configurations allocated by the network device for the terminal device are able to be reused by the network device, or resource usage states of the radio resources included in all CG configurations allocated by the network device for the terminal device are able to be reported by the terminal device.

In another implementation, the first candidate identifier may be an invalid value. None of radio resources included in all CG configurations allocated by the network device for the terminal device are able to be reused by the network device, or none of resource usage states of the radio resources included in all CG configurations allocated by the network device for the terminal device are able to be reported by the terminal device.

In some other embodiments, the resource parameter may be used to indicate a second candidate identifier corresponding to the CG configuration, and the first radio resource may be a radio resource included in the first CG configuration. The second candidate identifier may be used to indicate that the radio resource included in the first CG configuration is able to be reused by the network device, or the second candidate identifier may be used to indicate that the resource usage state of the radio resource included in the first CG configuration is able to be reported by the terminal device.

In an implementation, the second candidate identifier may be an invalid value. Radio resources included in all CG configurations allocated by the network device for the terminal device are able to be reused by the network device, or resource usage states of the radio resources included in all CG configurations allocated by the network device for the terminal device are able to be reported by the terminal device.

In another implementation, the second candidate identifier may be an invalid value. None of radio resources included in all CG configurations allocated by the network device for the terminal device are able to be reused by the network device, or none of resource usage states of the radio resources included in all CG configurations allocated by the network device for the terminal device are able to be reported by the terminal device.

It should be noted that the resource parameter may refer to the specific description in the embodiment shown in FIG. 4, and details are not described here again.

In this way, by using any one of the foregoing manners, the network device may determine the first radio resource according to the resource parameter.

FIG. 9 is a flowchart of a method for resource determination shown according to an example embodiment. As shown in FIG. 9, the method may be performed by the network device in the communication system. The method may include the following step.

In S901, the network device determines the first radio resource according to a third time domain position corresponding to a third radio resource.

Among them, the third radio resource may be a radio resource used to transmit the first message.

In some embodiments, the first time domain position corresponding to the first radio resource may be later than the third time domain position corresponding to the third radio resource.

In an implementation, the first time domain position may be a position of a start symbol or an end symbol of the first radio resource, and the second time domain position may be a position of a start symbol or an end symbol of the second radio resource.

In an implementation, the third time domain position may be a position of a start symbol or an end symbol of the third radio resource.

The third radio resource may be any one of a CG configuration, a CG PUSCH, a CG transmission occasion, a dynamically grant physical uplink shared channel (DG PUSCH), or a physical uplink control channel (PUCCH).

For example, the third radio resource may be a CG PUSCH, and the third time domain position may be a position of a start symbol or an end symbol of the CG PUSCH.

For another example, the third radio resource may be a CG PUSCH, the third time domain position may be a start symbol or an end symbol of a first carrying resource, and the first carrying resource may be a radio resource in the CG PUSCH that carries the first message.

For another example, the third radio resource may be a dynamically grant physical uplink shared channel (DG PUSCH), and the third time domain position may be a position of a start symbol or an end symbol of the DG PUSCH.

For another example, the third radio resource may be a DG PUSCH, the third time domain position may be a start symbol or an end symbol of a second carrying resource, and the second carrying resource may be a radio resource in the DG PUSCH that carries the first message.

For another example, the third radio resource may be a physical uplink control channel (PUCCH), and the third time domain position may be a position of a start symbol or an end symbol of the PUCCH.

In some other embodiments, the first time domain position corresponding to the first radio resource may be later than the third time domain position corresponding to the third radio resource, and the time difference between the first time domain position and the third time domain position may be greater than or equal to a first time interval.

In an implementation, the first time interval may be a time agreed by a protocol. The terminal device and the network device may determine the first time interval according to a manner agreed by a protocol, respectively.

In another implementation, the first time interval may be a time determined by the network device, and the network device may further send the first time interval to the terminal device.

In another implementation, the first time interval may be a time determined by the terminal device, and the terminal device may further send the first time interval to the network device.

In still another implementation, the first time interval may be determined according to a first terminal capability of the terminal device. For example, the first terminal capability may be defined by using a protocol. The first terminal capability may indicate a minimum time interval between the terminal device sending the first message and the CG transmission occasion being indicated to the terminal device, that is, the first time interval. Further, the network device may receive the first terminal capability corresponding to the terminal device by using capability reporting information, or the network device may receive the first time interval by using the capability reporting information.

For the third radio resource, the third time domain position, and the first time interval, reference may be made to the specific description in the embodiment shown in FIG. 5, and details are not described here again.

In this way, by using any one of the foregoing manners, the network device may determine the first radio resource according to the third time domain position corresponding to the third radio resource.

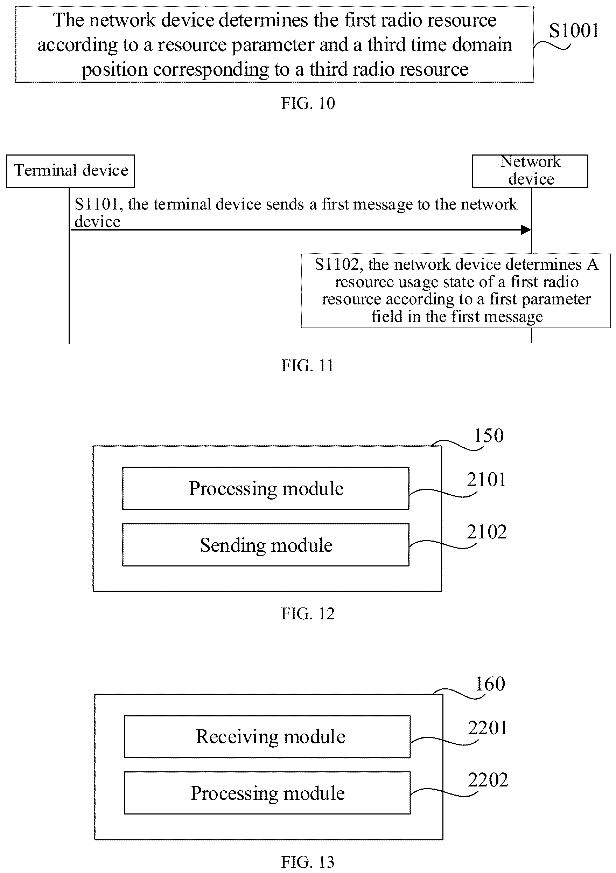

FIG. 10 is a flowchart of a method for resource determination shown according to an example embodiment. As shown in FIG. 10, the method may be performed by the network device in the communication system. The method may include following step.

In S1001, the network device determines the first radio resource according to a resource parameter and the third time domain position corresponding to the third radio resource.

Among them, the third radio resource may be a radio resource used to transmit the first message.

In some embodiments, the fifth radio resource may be determined according to the resource parameter, and the first radio resource may be determined from the fifth radio resource according to the third time domain position corresponding to the third radio resource.

In an implementation, the first time domain position corresponding to the first radio resource may be later than the third time domain position.

For example, the fifth radio resource is determined according to the resource parameter, and each fifth radio resource corresponds to one fifth time domain position. The fifth radio resource whose fifth time domain position is later than the third time domain position may be used as the first radio resource.

In another implementation, the first time domain position corresponding to the first radio resource may be later than the third time domain position corresponding to the third radio resource, and the time difference between the first time domain position and the third time domain position may be greater than or equal to the first time interval.

For example, the fifth radio resource is determined according to the resource parameter, and each fifth radio resource corresponds to one fifth time domain position. The fifth radio resource that the fifth time domain position is later than the third time domain position and the time difference between the fifth time domain position and the third time domain position is greater than or equal to the first time interval, may be used as the first radio resource.

It should be noted that the resource parameter may refer to the specific description in the embodiment shown in FIG. 4. The third radio resource, the third time domain position, and the first time interval may refer to the specific description in the embodiment shown in FIG. 5, and details are not described here again.

In this way, the network device may determine the first radio resource according to the resource parameter and the third time domain position corresponding to the third radio resource.

FIG. 11 is a flowchart of a method for resource determination shown according to an example embodiment. As shown in FIG. 11, the method may be performed by the communication system. The method may include following step.

In S1101, the terminal device sends a first message to the network device.

In some embodiments, the terminal device may determine a first radio resource and send the first message to the network device, where the first message may include a first parameter field, the first parameter field may be used to indicate a resource usage state of the first radio resource, the first radio resource is a subset or a full set of a second radio resource, and the second radio resource is a radio resource allocated to the terminal device by the network device based on the configured grant (CG) transmission manner.

In S1102, the network device determines the resource usage state of the first radio resource according to the first parameter field in the first message.

It should be noted that, in the case of no contradiction, this embodiment may be combined with the foregoing embodiments or implementations of the present disclosure and various optional solutions of them. The specific implementations of the foregoing steps in this embodiment may also refer to the descriptions in the foregoing embodiments of the present disclosure, and details are not described here again.

By using the foregoing method, the terminal device determines the first radio resource, and sends the first message to the network device, where the first message includes a first parameter field, the first parameter field is used to indicate a resource usage state of the first radio resource, the first radio resource is a subset or a full set of a second radio resource, and the second radio resource is a radio resource allocated to the terminal device by the network device based on the configured grant (CG) transmission manner. In this way, the terminal device may report the resource usage state of the first radio resource to the network device, so that the network device flexibly uses and schedules the first radio resource according to the resource usage state, to improve utilization rate of the radio resource allocated based on the CG transmission manner.

In an example embodiment, the present disclosure further provides a communication system. The communication system may include a terminal device and a network device, where the terminal device may perform the method for resource determination related to the terminal device in the foregoing embodiments of the present disclosure, and the network device may perform the method for resource determination related to the network device in the foregoing embodiments of the present disclosure.

FIG. 12 is a block diagram of a terminal device 150 shown according to an example embodiment. As shown in FIG. 12, the terminal device 150 may include a processing module 2101 and a sending module 2102.

The processing module 2101 is configured to determine a first radio resource, where the first radio resource is a subset or a full set of a second radio resource, and the second radio resource is a radio resource allocated to the terminal device by a network device based on a configured grant (CG) transmission manner.

The sending module 2102 is configured to send a first message to the network device, where the first message includes a first parameter field, and the first parameter field is used to indicate a resource usage state of the first radio resource.

In some embodiments, the processing module 2101 is configured to determine the first radio resource according to a resource parameter, where the resource parameter is a parameter determined by the network device and sent to the terminal device, or the resource parameter is a parameter determined by the terminal device and sent to the network device.

In some embodiments, the resource parameter is used to indicate a priority corresponding to the first radio resource, the priority corresponding to the first radio resource is a specified priority, and the specified priority is a high priority or a low priority.

In some embodiments, the resource parameter is used to indicate a priority corresponding to a CG configuration, the first radio resource is a radio resource included in a first CG configuration, a priority corresponding to the first CG configuration is a specified priority, and the specified priority is a high priority or a low priority.

In some embodiments, the resource parameter is used to indicate a first candidate identifier corresponding to the first radio resource, and the first candidate identifier is used to indicate that the first radio resource is able to be reused by the network device, or the first candidate identifier is used to indicate that the resource usage state of the first radio resource is able to be reported by the terminal device.

In some embodiments, the first candidate identifier is an invalid value, radio resources included in all CG configurations allocated by the network device for the terminal device are able to be reused by the network device, or resource usage states of the radio resources included in all CG configurations allocated by the network device for the terminal device are able to be reported by the terminal device.

In some embodiments, the first candidate identifier is an invalid value, none of radio resources included in all CG configurations allocated by the network device for the terminal device are able to be reused by the network device, or none of resource usage states of the radio resources included in all CG configurations allocated by the network device for the terminal device are able to be reported by the terminal device.

In some embodiments, the resource parameter is used to indicate a second candidate identifier corresponding to a CG configuration, the first radio resource is a radio resource included in a first CG configuration, the second candidate identifier is used to indicate that a radio resource included in the first CG configuration is able to be reused by the network device, or the second candidate identifier is used to indicate that the resource usage state of the radio resource included in the first CG configuration is able to be reported by the terminal device.

In some embodiments, the second candidate identifier is an invalid value, radio resources included in all CG configurations allocated by the network device for the terminal device are able to be reused by the network device, or resource usage states of the radio resources included in all CG configurations allocated by the network device for the terminal device are able to reported by the terminal device.

In some embodiments, the second candidate identifier is an invalid value, none of radio resources included in all CG configurations allocated by the network device for the terminal device are able to be reused by the network device, or none of resource usage states of the radio resources included in all CG configurations allocated by the network device for the terminal device are able to be reported by the terminal device.

In some embodiments, a first time domain position corresponding to the first radio resource is later than a third time domain position corresponding to a third radio resource, and the third radio resource is a radio resource used to transmit the first message.

In some embodiments, the first time domain position is a position of a start symbol or an end symbol of the first radio resource.

In some embodiments,
the third radio resource is a CG PUSCH, and the third time domain position is a position of a start symbol or an end symbol of the CG PUSCH; or
the third radio resource is a CG PUSCH, the third time domain position is a position of a start symbol or an end symbol of a first carrying resource, and the first carrying resource is a radio resource in the CG PUSCH that carries the first message; or
the third radio resource is a dynamically grant physical uplink shared channel (DG PUSCH), and the third time domain position is a position of a start symbol or an end symbol of the DG PUSCH; or
the third radio resource is a DG PUSCH, the third time domain position is a position of a start symbol or an end symbol of a second carrying resource, and the second carrying resource is a radio resource in the DG PUSCH that carries the first message; or
the third radio resource is a physical uplink control channel (PUCCH), and the third time domain position is a position of a start symbol or an end symbol of the PUCCH.

In some embodiments, a time difference between the first time domain position and the third time domain position is greater than or equal to a first time interval, where the first time interval is a time agreed by a protocol, or the first time interval is a time determined by the network device and sent to the terminal device, or the first time interval is a time determined by the terminal device and sent to the network device.

In some embodiments, the first message further includes a second parameter field, the second parameter field is used to indicate a first CG configuration, and the first radio resource is a radio resource included in the first CG configuration.

In some embodiments, the processing module 2101 is configured to determine the first radio resource according to a resource parameter and a third time domain position corresponding to a third radio resource, where a first time domain position corresponding to the first radio resource is later than the third time domain position, and the third radio resource is a radio resource used to transmit the first message.

In some embodiments, the sending module 2102 is configured to send the first message to the network device by using a fourth radio resource, where the fourth radio resource is a CG configuration determined according to a protocol agreement, or the fourth radio resource is a CG configuration determined by the network device and sent to the terminal device, or the fourth radio resource is a CG configuration determined by the terminal device and sent to the network device.

In some embodiments, the processing module 2101 is further configured to determine a CG parameter of at least one CG configuration allocated by the network device for the terminal device, and determine the fourth radio resource according to the CG parameter, where the CG parameter includes at least one of the following:
a configuration index of the CG configuration;
time domain position information of the CG configuration;
frequency domain position information of the CG configuration;
a number of CG transmission occasions included in the CG configuration; or
a priority of the CG configuration.

In some embodiments, the second radio resource is all CG transmission occasions corresponding to a second CG configuration, and the second CG configuration is at least one CG configuration allocated to the terminal device by the network device based on a configured grant (CG) transmission manner; and the first radio resource is a radio resource in the second radio resource that is able to be reused by the network device, or the first radio resource is a radio resource in the second radio resource whose resource usage state is able to be reported by the terminal device.

FIG. 13 is a block diagram of a network device 160 shown according to an example embodiment. As shown in FIG. 13, the network device 160 may include a receiving module 2201 and a processing module 2202.

The receiving module 2201 is configured to receive a first message sent by a terminal device, where the first message includes a first parameter field, the first parameter field is used to indicate a resource usage state of a first radio resource, the first radio resource is a subset or a full set of a second radio resource, and the second radio resource is a radio resource allocated to the terminal device by the network device based on a configured grant (CG) transmission manner.

The processing module 2202 configured to determine the resource usage state of the first radio resource according to the first parameter field in the first message.

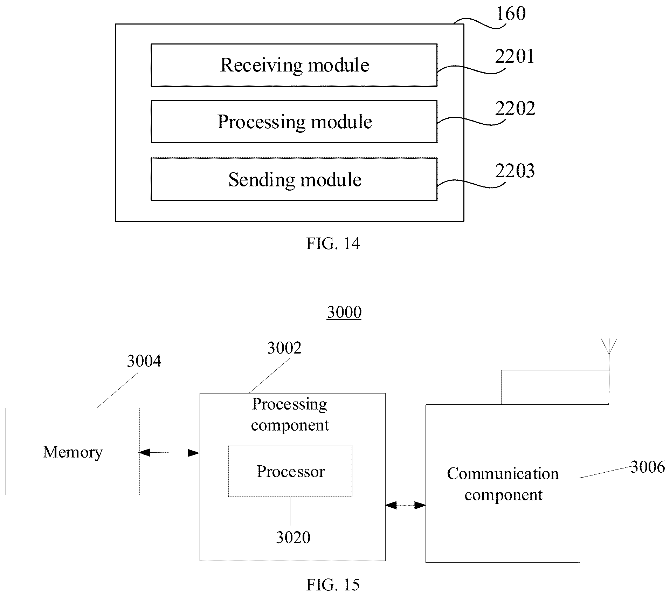

FIG. 14 is a block diagram of a network device 160 shown according to an example embodiment. As shown in FIG. 14, the network device 160 may further include a sending module 2203.

The sending module 2203 is configured to: send a resource parameter to the terminal device, where the resource parameter is used to indicate the terminal device to determine the first radio resource; or, receive a resource parameter sent by the terminal device, where the resource parameter is used to determine the first radio resource.

In some embodiments, the resource parameter is used to indicate a priority corresponding to the first radio resource, the priority corresponding to the first radio resource is a specified priority, and the specified priority is a high priority or a low priority.

In some embodiments, the resource parameter is used to indicate a priority corresponding to a CG configuration, the first radio resource is a radio resource included in a first CG configuration, the priority corresponding to the first CG configuration is a specified priority, and the specified priority is a high priority or a low priority.

In some embodiments, the resource parameter is used to indicate a first candidate identifier corresponding to the first radio resource, and the first candidate identifier is used to indicate that the first radio resource is able to be reused by the network device, or the first candidate identifier is used to indicate that the resource usage state of the first radio resource is able to be reported by the terminal device.

In some embodiments, the first candidate identifier is an invalid value, radio resources included in all CG configurations allocated by the network device for the terminal device are able to be reused by the network device, or resource usage states of the radio resources included in all CG configurations allocated by the network device for the terminal device are able to be reported by the terminal device.

In some embodiments, the first candidate identifier is an invalid value, none of radio resources included in all CG configurations allocated by the network device for the terminal device are able to be reused by the network device, or none of resource usage states of the radio resources included in all CG configurations allocated by the network device for the terminal device are able to be reported by the terminal device.

In some embodiments, the resource parameter is used to indicate a second candidate identifier corresponding to a CG configuration, the first radio resource is a radio resource included in a first CG configuration, the second candidate identifier is used to indicate that a radio resource included in the first CG configuration is able to be reused by the network device, or the second candidate identifier is used to indicate that the resource usage state of the radio resource included in the first CG configuration is able to be reported by the terminal device.

In some embodiments, the second candidate identifier is an invalid value, radio resources included in all CG configurations allocated by the network device for the terminal device are able to be reused by the network device, or resource usage states of the radio resources included in all CG configurations allocated by the network device for the terminal device are able to be reported by the terminal device.

In some embodiments, the second candidate identifier is an invalid value, none of radio resources included in all CG configurations allocated by the network device for the terminal device are able to be reused by the network device, or none of resource usage states of the radio resources included in all CG configurations allocated by the network device for the terminal device are able to be reported by the terminal device.

In some embodiments, a first time domain position corresponding to the first radio resource is later than a third time domain position corresponding to a third radio resource, and the third radio resource is a radio resource used to transmit the first message.

In some embodiments, the first time domain position is a position of a start symbol or an end symbol of the first radio resource.

In some embodiments,
the third radio resource is a CG PUSCH, and the third time domain position is a position of a start symbol or an end symbol of the CG PUSCH; or
the third radio resource is a CG PUSCH, the third time domain position is a position of a start symbol or an end symbol of a first carrying resource, and the first carrying resource is a radio resource in the CG PUSCH that carries the first message; or
the third radio resource is a dynamically grant physical uplink shared channel (DG PUSCH), and the third time domain position is a position of a start symbol or an end symbol of the DG PUSCH; or
the third radio resource is a DG PUSCH, the third time domain position is a position of a start symbol or an end symbol of a second carrying resource, and the second carrying resource is a radio resource in the DG PUSCH that carries the first message; or
the third radio resource is a physical uplink control channel (PUCCH), and the third time domain position is a position of a start symbol or an end symbol of the PUCCH.

In some embodiments, a time difference between the first time domain position and the third time domain position is greater than or equal to a first time interval, where the first time interval is a time agreed by a protocol, or the first time interval is a time determined by the network device and sent to the terminal device, or the first time interval is a time determined by the terminal device and sent to the network device.

In some embodiments, the first message further includes a second parameter field, the second parameter field is used to indicate a first CG configuration, and the first radio resource is a radio resource included in the first CG configuration.

In some embodiments, the first radio resource is a radio resource determined based on a resource parameter and a third time domain position corresponding to a third radio resource; a first time domain position corresponding to the first radio resource is later than the third time domain position, and the third radio resource is a radio resource used to transmit the first message.

In some embodiments, the receiving module 2201 is configured to receive the first message sent by the terminal device by using a fourth radio resource, where the fourth radio resource is a CG configuration determined according to a protocol agreement, or the fourth radio resource is a CG configuration determined by the network device and sent to the terminal device, or the fourth radio resource is a CG configuration determined by the terminal device and sent to the network device.

In some embodiments, the processing module 2202 is further configured to: determine a CG parameter of at least one CG configuration configured by the network device for the terminal device, and determine the fourth radio resource according to the CG parameter, where the CG parameter includes at least one of the following:
a configuration index of the CG configuration;
time domain position information of the CG configuration;
frequency domain position information of the CG configuration;
a number of CG transmission occasions included in the CG configuration; or
a priority of the CG configuration.

In some embodiments, the second radio resource is all CG transmission occasions corresponding to a second CG configuration, and the second CG configuration is at least one CG configuration allocated to the terminal device by the network device based on a configured grant (CG) transmission manner; and the first radio resource is a radio resource in the second radio resource that is able to be reused by the network device, or the first radio resource is a radio resource in the second radio resource whose resource usage state is able to be reported by the terminal device.

With regard to the apparatus in the above embodiments, the specific manner in which the modules perform operations has been described in detail in the embodiments related to the method, which will not be elaborated here.

FIG. 15 is a block diagram of an apparatus for resource determination shown according to an example embodiment. The apparatus 3000 for resource determination may be the terminal device in the communication system shown in FIG. 1, or may be the network device in the communication system.

Referring to FIG. 15, the apparatus 3000 may include one or more of the following components: a processing component 3002, a memory 3004, and a communication component 3006.

The processing component 3002 may be used to control the overall operations of the apparatus 3000, such as operations associated with display, telephone calls, data communications, camera operations, and recording operations. The processing component 3002 may include one or more processors 3020 to execute the instructions to complete all or part of the steps of the above method for resource determination. In addition, the processing component 3002 may include one or more modules to facilitate interaction between the processing component 3002 and other components. For example, the processing component 3002 may include a multimedia module to facilitate interaction between the multi-media component and the processing component 3002.

The memory 3004 is configured to store various types of data to support operations at the apparatus 3000. Examples of such data include instructions for any application or method operating on the apparatus 3000, contact data, phonebook data, messages, pictures, videos, etc. The memory 3004 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component 3006 is configured to facilitate communication between the apparatus 3000 and other devices in a wired or wireless manner. The apparatus 3000 may access a wireless network based on a communication standard, such as Wi-Fi, 2G, 3G, 4G, 5G, 6G, NB-IOT, eMTC, or a combination of them. In an example embodiment, the communication component 3006 receives broadcast signals or broadcast-related information from an external broadcast management system via a broadcast channel. In an example embodiment, the communication component 3006 further includes a near field communication (NFC) module to facilitate short range communications. For example, the NFC module may be implemented based on a radio frequency identification (RFID) technology, an infrared data association (IrDA) technology, an ultra-wideband (UWB) technology, a Bluetooth (BT) technology, or other technologies.

In an example embodiment, the apparatus 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the method for resource determination described above.

The apparatus 3000 may be an independent electronic device, or may be a part of an independent electronic device. For example, in an embodiment, the electronic device may be an integrated circuit (IC) or a chip, where the integrated circuit may be an IC, or may be a set of a plurality of ICs. The chip may include, but is not limited to, a graphics processing unit (GPU), a central processing unit (CPU), a field programmable gate array (FPGA), a digital signal processor (DSP), an application specific integrated Circuit (ASIC), a system on chip (SOC), etc. The foregoing integrated circuit or chip may be configured to execute executable instructions (or code) to implement the foregoing method for resource determination. Among them, the executable instruction may be stored in the integrated circuit or chip, or may be obtained from another apparatus or device. For example, the integrated circuit or the chip includes a processor, a memory, and an interface configured to communicate with another apparatus. The executable instruction may be stored in the processor, and when the executable instruction is executed by the processor, the method for resource determination is implemented; or, the integrated circuit or the chip may receive the executable instruction by using the interface and transmit the executable instruction to the processor to implement the foregoing method for resource determination.

In an example embodiment, the present disclosure further provides a computer-readable storage medium having stored a computer program instruction thereon. When the computer program instruction is executed by a processor, the steps of the method for resource determination provided by the present disclosure are implemented. For example, the computer-readable storage medium may be a non-transitory computer-readable storage medium including instructions, for example, may be the memory 3004 including instructions. The instructions may be executed by the processor 3020 of the apparatus 3000 to complete the foregoing method for resource determination. For example, the non-transitory computer-readable storage medium may be a ROM, a random access memory (RAM), a CD-ROM, a magnetic tape, a floppy disk, an optical data storage device, or the like.

In another example embodiment, there is further provided a computer program product including a computer program executable by a programmable apparatus. The computer program has a code portion for performing the above method of resource determination when executed by the programmable apparatus.

Other embodiments of the present disclosure will be apparent to those skilled in the art from consideration of the description and practice of the present disclosure. The present application is intended to cover any variations, uses, or adaptations of the present disclosure following the general principles of the present disclosure and including common general knowledge or conventional technical means in the art that are not disclosed in the present disclosure. It is intended that the specification and examples should be considered as examples only, with a true scope and spirit of the present disclosure being indicated by the following claims.

It should be understood that the present disclosure is not limited to the precise structures described above and shown in the accompanying drawings, and various modifications and changes may be made without departing from the scope of the present disclosure. It is intended that the scope of the present disclosure should be only limited by the appended claims.

## Claims

1. A method for resource determination, performed by a terminal device, and comprising:
determining a first radio resource, wherein the first radio resource is a subset or a full set of a second radio resource, and the second radio resource is a radio resource allocated to the terminal device by a network device based on a configured grant , CG, transmission manner; and
sending a first message to the network device, wherein the first message comprises a first parameter field, and the first parameter field is used to indicate a resource usage state of the first radio resource.

2. The method according to claim 1, wherein determining the first radio resource comprises:
determining the first radio resource according to a resource parameter, wherein the resource parameter is a parameter determined by the network device and sent to the terminal device, or the resource parameter is a parameter determined by the terminal device and sent to the network device.

3. The method according to claim 2, wherein the resource parameter is used to indicate a priority corresponding to the first radio resource, the priority corresponding to the first radio resource is a specified priority, and the specified priority is a high priority or a low priority.

4. The method according to claim 2, wherein the resource parameter is used to indicate a priority corresponding to a CG configuration, the first radio resource is a radio resource comprised in a first CG configuration, a priority corresponding to the first CG configuration is a specified priority, and the specified priority is a high priority or a low priority.

5. The method according to claim 2, wherein the resource parameter is used to indicate a first candidate identifier corresponding to the first radio resource, the first candidate identifier is used to indicate that the first radio resource is able to be reused by the network device, or the first candidate identifier is used to indicate that the resource usage state of the first radio resource is able to be reported by the terminal device.

6. The method according to claim 5, wherein,
the first candidate identifier is an invalid value, radio resources comprised in all CG configurations allocated by the network device for the terminal device are able to be reused by the network device, or resource usage states of the radio resources comprised in all CG configurations allocated by the network device for the terminal device are able to be reported by the terminal device.

7. The method according to claim 5, wherein,
the first candidate identifier is an invalid value, none of radio resources comprised in all CG configurations allocated by the network device for the terminal device are able to be reused by the network device, or none of resource usage states of the radio resources comprised in all CG configurations allocated by the network device for the terminal device are able to be reported by the terminal device.

8. The method according to claim 2, wherein the resource parameter is used to indicate a second candidate identifier corresponding to a CG configuration, the first radio resource is a radio resource comprised in a first CG configuration, the second candidate identifier is used to indicate that a radio resource comprised in the first CG configuration is able to be reused by the network device, or the second candidate identifier is used to indicate that the resource usage state of the radio resource comprised in the first CG configuration is able to be reported by the terminal device.

9. The method according to claim 8, wherein,
the second candidate identifier is an invalid value, radio resources comprised in all CG configurations allocated by the network device for the terminal device are able to be reused by the network device, or resource usage states of the radio resources comprised in all CG configurations allocated by the network device for the terminal device are able to reported by the terminal device.

10. The method according to claim 8, wherein,
the second candidate identifier is an invalid value, none of radio resources comprised in all CG configurations allocated by the network device for the terminal device are able to be reused by the network device, or none of resource usage states of the radio resources comprised in all CG configurations allocated by the network device for the terminal device are able to be reported by the terminal device.

11. The method according to claim 1, wherein a first time domain position corresponding to the first radio resource is later than a third time domain position corresponding to a third radio resource, and the third radio resource is a radio resource used to transmit the first message.

12. The method according to claim 11, wherein the first time domain position is a position of a start symbol or an end symbol of the first radio resource.

13. The method according to claim 11, wherein,
the third radio resource is a CG PUSCH, and the third time domain position is a position of a start symbol or an end symbol of the CG PUSCH; or
the third radio resource is a CG PUSCH, the third time domain position is a position of a start symbol or an end symbol of a first carrying resource, and the first carrying resource is a radio resource in the CG PUSCH that carries the first message; or
the third radio resource is a dynamically grant physical uplink shared channel (DG PUSCH), and the third time domain position is a position of a start symbol or an end symbol of the DG PUSCH; or
the third radio resource is a DG PUSCH, the third time domain position is a position of a start symbol or an end symbol of a second carrying resource, and the second carrying resource is a radio resource in the DG PUSCH that carries the first message; or
the third radio resource is a physical uplink control channel (PUCCH), and the third time domain position is a position of a start symbol or an end symbol of the PUCCH.

14. The method according to claim 11, wherein a time difference between the first time domain position and the third time domain position is greater than or equal to a first time interval, wherein the first time interval is a time agreed by a protocol, or the first time interval is a time determined by the network device and sent to the terminal device, or the first time interval is a time determined by the terminal device and sent to the network device.

15. The method according to claim 1, wherein the first message further comprises a second parameter field, the second parameter field is used to indicate a first CG configuration, and the first radio resource is a radio resource comprised in the first CG configuration.

16. The method according to claim 1, wherein determining the first radio resource comprises:
determining the first radio resource according to a resource parameter and a third time domain position corresponding to a third radio resource, wherein a first time domain position corresponding to the first radio resource is later than the third time domain position, and the third radio resource is a radio resource used to transmit the first message.

17. The method according to claim 1, wherein sending the first message to the network device comprises:
sending the first message to the network device by using a fourth radio resource, wherein the fourth radio resource is a CG configuration determined according to a protocol agreement, or the fourth radio resource is a CG configuration determined by the network device and sent to the terminal device, or the fourth radio resource is a CG configuration determined by the terminal device and sent to the network device.

18. The method according to claim 17, wherein in a case that the fourth radio resource is a CG configuration determined according to a protocol agreement, the method further comprises:
determining a CG parameter of at least one CG configuration allocated by the network device for the terminal device; and
determining the fourth radio resource according to the CG parameter;
wherein the CG parameter comprises at least one of:
a configuration index of the CG configuration;
time domain position information of the CG configuration;
frequency domain position information of the CG configuration;
a number of CG transmission occasions comprised in the CG configuration; or
a priority of the CG configuration.

19. The method according to any one of claims 1 to 18, wherein,
the second radio resource is all CG transmission occasions corresponding to a second CG configuration, and the second CG configuration is at least one CG configuration allocated to the terminal device by the network device based on the configured grant , CG, transmission manner; and
the first radio resource is a radio resource in the second radio resource that is able to be reused by the network device, or the first radio resource is a radio resource in the second radio resource whose resource usage state is able to be reported by the terminal device.

20. A method for resource determination, performed by a network device, and comprising:
receiving a first message sent by a terminal device, wherein the first message comprises a first parameter field, the first parameter field is used to indicate a resource usage state of a first radio resource, the first radio resource is a subset or a full set of a second radio resource, and the second radio resource is a radio resource allocated to the terminal device by the network device based on a configured grant , CG, transmission manner; and
determining the resource usage state of the first radio resource according to the first parameter field in the first message.

21. The method according to claim 20, further comprising:
sending a resource parameter to the terminal device, wherein the resource parameter is used to indicate the terminal device to determine the first radio resource; or
receiving a resource parameter sent by the terminal device, wherein the resource parameter is used to determine the first radio resource.

22. The method according to claim 21, wherein the resource parameter is used to indicate a priority corresponding to the first radio resource, the priority corresponding to the first radio resource is a specified priority, and the specified priority is a high priority or a low priority.

23. The method according to claim 21, wherein the resource parameter is used to indicate a priority corresponding to a CG configuration, the first radio resource is a radio resource comprised in a first CG configuration, a priority corresponding to the first CG configuration is a specified priority, and the specified priority is a high priority or a low priority.

24. The method according to claim 21, wherein the resource parameter is used to indicate a first candidate identifier corresponding to the first radio resource, the first candidate identifier is used to indicate that the first radio resource is able to be reused by the network device, or the first candidate identifier is used to indicate that the resource usage state of the first radio resource is able to be reported by the terminal device.

25. The method according to claim 24, wherein,
the first candidate identifier is an invalid value, radio resources comprised in all CG configurations allocated by the network device for the terminal device are able to be reused by the network device, or resource usage states of the radio resources comprised in all CG configurations allocated by the network device for the terminal device are able to be reported by the terminal device.

26. The method according to claim 24, wherein,
the first candidate identifier is an invalid value, none of radio resources comprised in all CG configurations allocated by the network device for the terminal device are able to be reused by the network device, or none of resource usage states of the radio resources comprised in all CG configurations allocated by the network device for the terminal device are able to be reported by the terminal device.

27. The method according to claim 21, wherein the resource parameter is used to indicate a second candidate identifier corresponding to a CG configuration, the first radio resource is a radio resource comprised in a first CG configuration, the second candidate identifier is used to indicate that a radio resource comprised in the first CG configuration is able to be reused by the network device, or the second candidate identifier is used to indicate that the resource usage state of the radio resource comprised in the first CG configuration is able to be reported by the terminal device.

28. The method according to claim 27, wherein,
the second candidate identifier is an invalid value, radio resources comprised in all CG configurations allocated by the network device for the terminal device are able to be reused by the network device, or resource usage states of the radio resources comprised in all CG configurations allocated by the network device for the terminal device are able to reported by the terminal device.

29. The method according to claim 27, wherein,
the second candidate identifier is an invalid value, none of radio resources comprised in all CG configurations allocated by the network device for the terminal device are able to be reused by the network device, or none of resource usage states of the radio resources comprised in all CG configurations allocated by the network device for the terminal device are able to be reported by the terminal device.

30. The method according to claim 20, wherein a first time domain position corresponding to the first radio resource is later than a third time domain position corresponding to a third radio resource, and the third radio resource is a radio resource used to transmit the first message.

31. The method according to claim 30, wherein the first time domain position is a position of a start symbol or an end symbol of the first radio resource.

32. The method according to claim 30, wherein,
the third radio resource is a CG PUSCH, and the third time domain position is a position of a start symbol or an end symbol of the CG PUSCH; or
the third radio resource is a CG PUSCH, the third time domain position is a position of a start symbol or an end symbol of a first carrying resource, and the first carrying resource is a radio resource in the CG PUSCH that carries the first message; or
the third radio resource is a dynamically grant physical uplink shared channel (DG PUSCH), and the third time domain position is a position of a start symbol or an end symbol of the DG PUSCH; or
the third radio resource is a DG PUSCH, the third time domain position is a position of a start symbol or an end symbol of a second carrying resource, and the second carrying resource is a radio resource in the DG PUSCH that carries the first message; or
the third radio resource is a physical uplink control channel (PUCCH), and the third time domain position is a position of a start symbol or an end symbol of the PUCCH.

33. The method according to claim 30, wherein a time difference between the first time domain position and the third time domain position is greater than or equal to a first time interval, wherein the first time interval is a time agreed by a protocol, or the first time interval is a time determined by the network device and sent to the terminal device, or the first time interval is a time determined by the terminal device and sent to the network device.

34. The method according to claim 20, wherein the first message further comprises a second parameter field, the second parameter field is used to indicate a first CG configuration, and the first radio resource is a radio resource comprised in the first CG configuration.

35. The method according to claim 20, wherein the first radio resource is a radio resource determined according to a resource parameter and a third time domain position corresponding to a third radio resource, a first time domain position corresponding to the first radio resource is later than the third time domain position, and the third radio resource is a radio resource used to transmit the first message.

36. The method according to claim 20, wherein receiving the first message sent by the terminal device comprises:
receiving the first message sent by the terminal device by using a fourth radio resource, wherein the fourth radio resource is a CG configuration determined according to a protocol agreement, or the fourth radio resource is a CG configuration determined by the network device and sent to the terminal device, or the fourth radio resource is a CG configuration determined by the terminal device and sent to the network device.

37. The method according to claim 36, wherein in a case that the fourth radio resource is a CG configuration determined according to a protocol agreement, the method further comprises:
determining a CG parameter of at least one CG configuration allocated by the network device for the terminal device; and
determining the fourth radio resource according to the CG parameter;
wherein the CG parameter comprises at least one of:
a configuration index of the CG configuration;
time domain position information of the CG configuration;
frequency domain position information of the CG configuration;
a number of CG transmission occasions comprised in the CG configuration; or
a priority of the CG configuration.

38. The method according to any one of claims 20 to 37, wherein,
the second radio resource is all CG transmission occasions corresponding to a second CG configuration, and the second CG configuration is at least one CG configuration allocated to the terminal device by the network device based on the configured grant , CG, transmission manner; and
the first radio resource is a radio resource in the second radio resource that is able to be reused by the network device, or the first radio resource is a radio resource in the second radio resource whose resource usage state is able to be reported by the terminal device.

39. A terminal device, comprising:
a processing module, configured to determine a first radio resource, wherein the first radio resource is a subset or a full set of a second radio resource, and the second radio resource is a radio resource allocated to the terminal device by a network device based on a configured grant , CG, transmission manner; and
a sending module, configured to send a first message to the network device, wherein the first message comprises a first parameter field, and the first parameter field is used to indicate a resource usage state of the first radio resource.

40. A network device, comprising:
a receiving module, configured to receive a first message sent by a terminal device, wherein the first message comprises a first parameter field, the first parameter field is used to indicate a resource usage state of a first radio resource, the first radio resource is a subset or a full set of a second radio resource, and the second radio resource is a radio resource allocated to the terminal device by the network device based on a configured grant (CG) transmission manner; and
a processing module, configured to determine the resource usage state of the first radio resource based on a first parameter field in the first message.

41. An apparatus for resource determination, comprising:
a processor; and
a memory, configured to store an instruction executable by the processor;
wherein the processor is configured to perform steps of the method according to any one of claims 1 to 19, or the processor is configured to perform steps of the method according to any one of claims 20 to 38.

42. A computer-readable storage medium having a computer program instruction stored thereon, wherein, when the computer program instruction is executed by a processor, steps of the method according to any one of claims 1 to 19 are implemented, or when the computer program instruction is executed by the processor, steps of the method according to any one of claims 20 to 38 are implemented.

43. A communication system, comprising:
a terminal device, configured to perform the method according to any one of claims 1 to 19; and
a network device, configured to perform the method according to any one of claims 20 to 38.
